# EUROPÄISCHE PATENTANMELDUNG

(11) **EP 4 797 194 A1**
(43) Veröffentlichungstag der Anmeldung: **26.08.2026**
(21) Anmeldenummer: 26154231.0
(22) Anmeldetag: 26.01.2026
(51) Int. Cl.: G06Q 50/40, B60L 58/12, G07C 5/08

(54) **VERFAHREN UND SYSTEM ZUM SCHÄTZEN EINES VERBRAUCHS EINES FAHRZEUGS**

(30) Priorität: 21.02.2025 DE 102025106621
(71) Anmelder: Volkswagen Aktiengesellschaft, 38440 Wolfsburg (DE)
(72) Erfinder: Kaste, Jonas, 38440 Wolfsburg (DE); Stahl, Felix, 38440 Wolfsburg (DE); Kallmeyer, Felix, 38440 Wolfsburg (DE); Bartels, Arne, 38440 Wolfsburg (DE)

(57) **Zusammenfassung**

Die Erfindung betrifft ein Verfahren zum Schätzen eines Verbrauchs (20) eines Fahrzeugs (50), wobei in Fahrzeugen (50) einer Fahrzeugflotte (51) jeweils Verbrauchsinformationen (10) gesammelt werden, wobei die Verbrauchsinformationen (10) jeweils mindestens eine einen Fahrzeugzugstand des Fahrzeugs (50) beschreibende Zustandsinformation (10-1) verknüpft mit einem erfassten Verbrauch (10-2) des Fahrzeugs (50) umfasst; wobei ausgehend von den gesammelten Verbrauchsinformationen (10) ein Maschinenlernmodell (4) trainiert wird, wobei das Maschinenlernmodell (4) als Eingangsdaten (4-1) die Zustandsinformation (10-1,11) erhält und als Ausgangsdaten (4-2) einen Verbrauch (20) schätzt, wobei ausgehend von aktuellen Zustandsinformationen (11) ein Verbrauch (20) des Fahrzeugs (50) mittels des trainierten Maschinenlernverfahrens (4t) geschätzt und bereitgestellt wird. Ferner betrifft die Erfindung ein System (1) zum Schätzen eines Verbrauchs (20) eines Fahrzeugs (50).

## Beschreibung

Die Erfindung betrifft ein Verfahren und ein System zum Schätzen eines Verbrauchs eines Fahrzeugs.

Der Energieverbrauch eines Fahrzeugs kann in unterschiedlichen Situationen durch gezielte Maßnahmen deutlich reduziert werden. Um eine realistische Abschätzung eines Verbrauchs und möglichen Verbrauchsersparnissen vorzunehmen und hieraus resultierend eine Empfehlung mit hoher Akzeptanz an einen Fahrer auszusprechen, sind unterschiedliche Effekte abzubilden, was durch einen rein expertenbasierten Ansatz nur schwer zu realisieren ist. Eine wesentliche Rolle spielen hierbei Effekte, wie beispielsweise ein Straßenuntergrund, Wind, eine Geschwindigkeit des Fahrzeugs, aber beispielsweise auch eine Annäherung an ein vorausfahrendes Fahrzeug, um einen Windschatten dieses Fahrzeugs auszunutzen.

Die DE 10 2022 004 321 A1 beschreibt ein Verfahren zur Verbrauchsschätzung von Elektrofahrzeugen, wobei einem mit historischen Fahrtinformationen trainiertem ersten Maschinenlernmodell als Eingangsdaten aktuelle Fahrtinformationen bereitgestellt werden und das erste Maschinenlernmodell als Ausgangsdaten eine erste Verbrauchsschätzung elektrischer Antriebsenergie für eine durch die aktuellen Fahrtinformation charakterisierte aktuelle Fahrt mit einem Elektrofahrzeug ermittelt. Das Verfahren sieht vor, dass ein zweites Maschinenlernmodell vorgesehen ist, welches die aktuellen Fahrtinformationen und die erste Verbrauchsschätzung als Eingangsdaten einliest und daraus eine zweite Verbrauchsschätzung ermittelt; das Elektrofahrzeug seinen tatsächlichen Energieverbrauch erhebt und das zweite Maschinenlernmodell den erhobenen tatsächlichen Verbrauch zum Trainieren einliest; das zweite Maschinenlernmodell zum Ermitteln der zweiten Verbrauchsschätzung eine Gewichtung zwischen der ersten Verbrauchsschätzung und einem selbst ermittelten vorläufigen Verbrauch vornimmt; und das zweite Maschinenlernmodell die Gewichtung mit fortschreitendem Training anpasst, wobei mit fortschreitendem Training der Gewichtungsanteil der ersten Verbrauchsschätzung reduziert und der Gewichtungsanteil des vorläufigen Verbrauchs erhöht wird.

Der Erfindung liegt die Aufgabe zu Grunde, ein Verfahren und ein System zum Schätzen eines Verbrauchs eines Fahrzeugs zu verbessern.

Die Aufgabe wird erfindungsgemäß durch ein Verfahren mit den Merkmalen des Patentanspruchs 1 und ein System mit den Merkmalen des Patentanspruchs 12 gelöst. Vorteilhafte Ausgestaltungen der Erfindung ergeben sich aus den Unteransprüchen.

Insbesondere wird ein Verfahren zum Schätzen eines Verbrauchs eines Fahrzeugs zur Verfügung gestellt, wobei in Fahrzeugen einer Fahrzeugflotte jeweils Verbrauchsinformationen gesammelt werden, wobei die Verbrauchsinformationen jeweils mindestens eine einen Fahrzeugzugstand des Fahrzeugs beschreibende Zustandsinformation verknüpft mit einem erfassten Verbrauch des Fahrzeugs umfasst; wobei ausgehend von den gesammelten Verbrauchsinformationen ein Maschinenlernmodell trainiert wird, wobei das Maschinenlernmodell als Eingangsdaten die Zustandsinformation erhält und als Ausgangsdaten einen Verbrauch schätzt, wobei ausgehend von aktuellen Zustandsinformationen ein Verbrauch des Fahrzeugs mittels des trainierten Maschinenlernverfahrens geschätzt und bereitgestellt wird.

Ferner wird insbesondere ein System zum Schätzen eines Verbrauchs eines Fahrzeugs geschaffen, wobei das System Fahrzeuge einer Fahrzeugflotte umfasst, wobei die Fahrzeuge dazu eingerichtet sind, jeweils Verbrauchsinformationen zu sammeln, wobei die Verbrauchsinformationen jeweils mindestens eine einen Fahrzeugzugstand des Fahrzeugs beschreibende Zustandsinformation verknüpft mit einem erfassten Verbrauch des Fahrzeugs umfasst; und eine Datenverarbeitungseinrichtung, wobei die Datenverarbeitungseinrichtung dazu eingerichtet ist, ausgehend von den gesammelten Verbrauchsinformationen ein Maschinenlernmodell zu trainieren, wobei das Maschinenlernmodell als Eingangsdaten die Zustandsinformation erhält und als Ausgangsdaten einen Verbrauch schätzt, wobei die Fahrzeuge ferner dazu eingerichtet sind, jeweils ausgehend von aktuellen Zustandsinformationen einen Verbrauch des Fahrzeugs mittels des trainierten Maschinenlernverfahrens zu schätzen und bereitzustellen.

Das Verfahren und das System ermöglichen es, einen Verbrauch eines Fahrzeugs basierend auf gesammelten Schwarmdaten zu schätzen. Da hierbei reale Verbräuche einer Vielzahl von Fahrzeugen einer Fahrzeugflotte berücksichtigt werden, kann hierdurch insbesondere eine Güte beim Schätzen des Verbrauchs eines Fahrzeugs erhöht werden. Hierzu ist vorgesehen, dass in Fahrzeugen einer Fahrzeugflotte jeweils Verbrauchsinformationen gesammelt werden.

Die Verbrauchsinformationen umfassen jeweils mindestens eine einen Fahrzeugzugstand des Fahrzeugs beschreibende Zustandsinformation und hiermit verknüpft einen erfassten Verbrauch des Fahrzeugs. Der Begriff Verbrauch bezeichnet hierbei insbesondere einen Wert des Verbrauchs mit Bezug auf eine vorgegebene Strecke; bei einem Fahrzeug mit Verbrennungsmotor beispielsweise einen Wert mit der Einheit Liter pro 100 km, bei einem Elektrofahrzeug beispielsweise einen Wert mit der Einheit kWh pro 100 km. Grundsätzlich sind auch andere, geeignete Einheiten möglich. Insbesondere ist es auch möglich, einen Verbrauch in Energie pro Zeit oder pro Zeitabschnitt anzugeben. Ausgehend von den gesammelten Verbrauchsinformationen wird ein Maschinenlernmodell trainiert, wobei das Maschinenlernmodell als Eingangsdaten die Zustandsinformation (den mindestens einen Fahrzeugzustand) erhält und als Ausgangsdaten einen Verbrauch schätzt. Der Begriff Schätzen umfasst hierbei insbesondere das Ermitteln eines Wertes für den Verbrauch basierend auf den jeweiligen Eingangsdaten. Das Maschinenlernmodell wird insbesondere mittels eines aus den gesammelten Verbrauchsinformationen der Fahrzeuge konstruierten Trainingsdatensatzes trainiert, wobei der Trainingsdatensatz eine Menge von Datenpaaren umfasst, die jeweils die Zustandsinformation gepaart (verknüpft) mit dem zugehörig erfassten Verbrauch umfassen. Der erfasste Verbrauch bildet beim Trainieren eine jeweilige Grundwahrheit (engl. ground truth) für jedes der Datenpaare. Das Trainieren erfolgt in an sich bekannter Weise, beispielsweise im Wege des überwachten Lernens. Ausgehend von aktuellen Zustandsinformationen, die insbesondere im Rahmen einer Folgefahrt des Fahrzeugs erfasst und/oder bestimmt werden, wird ein Verbrauch des Fahrzeugs mittels des trainierten Maschinenlernverfahrens geschätzt und bereitgestellt. Insbesondere wird der jeweilige Verbrauch durch Anwenden des trainierten Maschinenlernverfahrens auf die erfassten und/oder bestimmten aktuellen Zustandsinformationen geschätzt. Das Schätzen erfolgt insbesondere, indem das trainierte Maschinenlernmodell Ausgangsdaten erzeugt. Das Bereitstellen kann insbesondere ein Ausgeben des geschätzten Verbrauchs, insbesondere einer den geschätzten Verbrauch kodierenden Information, beispielsweise als analoges oder digitales Signal umfassen. Ausgehend hiervon kann einem Fahrer des Fahrzeugs ein aktueller (geschätzter) Verbrauch angezeigt werden und/oder eine Fahrzeugsteuerung kann den geschätzten Verbrauch bei einer Planung einer zukünftigen Fahrtroute und/oder Fahrweise berücksichtigen.

Der Fahrzeugzustand bzw. die Zustandsinformation kann beispielsweise mindestens eine der folgenden Größen und/oder Informationen, welche auch als Deskriptoren bezeichnet werden können, umfassen:
- eine Geschwindigkeit,
- **eine Beschleunigung** / eine Verzögerung,
- einen Lenkradwinkel,
- eine Querbeschleunigung,
- eine Sitzplatzbelegung,
- eine Innenraumkamerainformation,
- eine Fahrzeug-ID: beispielsweise einen Fahrzeugtyp, ein Fahrzeuggewicht, eine Motorisierung, etc.,
- Reifenluftdruckinformationen,
- eine Vertikaldynamikinformation,
- eine Information betreffend aktivierte Verbraucher (z.B. Klimaanlage, Heizung, Sitzheizung usw.)
- eine Konfigurationsinformation, z.B. ob ein Anhänger oder ein Fahrradhalter etc. vorhanden ist,
- einen Fahrmodus (z.B. Komfort, Öko, Sport usw.)
- eine Sensorinformation, z.B. von einer Umfeldkamera und/oder eines Umfeldradars:
   ∘ einen Fahrzeugtyp von anderen Fahrzeugen im Umfeld,
   o Geschwindigkeiten von Fahrzeugen im Umfeld,
   o einen Abstand zu vorausfahrenden Fahrzeugen bzw. eine hiermit einhergehende Zeitlücke,
- Umfeldeinflüsse:
   o Sensordaten eines Regensensors,
   o eine Außentemperatur,
- Karteninformationen:
   o eine Fahrbahnsteigung,
   o eine seitliche Neigung,
- usw.

Die Größen können zumindest teilweise insbesondere über ein Controller Area Network-(CAN)-Bus des jeweiligen Fahrzeugs abgefragt und/oder erhalten werden. Die Größen können beispielsweise auch von einer Fahrzeugsteuerung abgefragt und/oder bereitgestellt werden. Beispielsweise können Informationen zum Fahrzeug, die sich nicht verändern, in einem Speicher der Fahrzeugsteuerung hinterlegt sein (z.B. die Fahrzeug-ID).

Das Maschinenlernmodell kann beispielsweise ein Decision Tree, einen Random Forest oder ein (rekurrentes) Neuronales Netz, insbesondere ein (Convolutional) Long short-term memory (LSTM), insbesondere mit mehreren LSTM-Schichten, umfassen. Das Trainieren des Maschinenlernmodells erfolgt insbesondere mit Hilfe von über unterschiedliche Fahrzeugzustände differenzierte und aggregierte Verbrauchsinformationen. Beispielsweise können Verbrauchsinformationen gleicher Fahrzeugtypen (z.B. Kleinwagen, Mittelklassewagen, Oberklassewagen, Kleinbus etc.) und/oder anhand sonstiger mittels Klassifizierungsverfahren anhand der Zustandsinformationen aufgefundener Klassen und/oder Gruppen zu jeweils einem Trainingsdatensatz zusammengefasst werden, wobei ein spezifisch für den jeweiligen Fahrzeugtyp bzw. für die jeweiligen Klassen und/oder Gruppen trainiertes Maschinenlernmodell erzeugt wird. Ziel ist es insbesondere, unterschiedliche Fahrzeugzustände differenzieren zu können und hierbei dynamische Größen des Fahrzeugs in Längsrichtung (z.B. über Geschwindigkeit, Beschleunigung / Verzögerung), für einen Kurvenwiderstand in Querrichtung (z.B. über Lenkradwinkel, Querbeschleunigung, Krümmung), eine Interaktion mit vorausfahrenden Fahrzeugen (z.B. über einen Abstand / eine Zeitlücke, einen Fahrzeugtyp des vorausfahrenden Fahrzeugs) sowie Effekte einer Straßenqualität (z.B. über eine Vertikaldynamik) zu berücksichtigen und ein hierfür trainiertes Maschinenlernmodell bereitstellen zu können. Das jeweils für ein Fahrzeug vorgesehene trainierte Maschinenlernmodell kann beispielsweise über eine Fahrzeug-ID identifiziert bzw. unterschieden werden.

Die Verbrauchsinformationen werden insbesondere für vorgegebene Zeitabschnitte und/oder Streckenabschnitte erfasst. Beispielsweise kann vorgesehen sein, dass die Verbrauchsinformationen periodisch für eine vorgegebene Dauer der Zeitabschnitte und/oder periodisch für eine vorgegebene Länge der Streckenabschnitte erfasst und gesammelt werden. Hierdurch können für eine Vielzahl von Zustandsinformationen Verbrauchsinformationen gesammelt und zum Trainieren des Maschinenlernmodells verwendet werden.

Teile des Systems, insbesondere die Datenverarbeitungseinrichtung, können einzeln oder zusammengefasst als eine Kombination von Hardware und Software ausgebildet sein, beispielsweise als Programmcode, der auf einer Recheneinrichtung, insbesondere einem Mikrocontroller oder Mikroprozessor, ausgeführt wird. Es kann jedoch auch vorgesehen sein, dass Teile einzeln oder zusammengefasst als anwendungsspezifische integrierte Schaltung (ASIC) und/oder feldprogrammierbares Gatterfeld (FPGA) und/oder Graphikprozessor (GPU) und/oder Digitaler Signalprozessor (DSP) ausgebildet sind. Die Datenverarbeitungseinrichtung kann insbesondere mindestens eine Recheneinrichtung und mindestens einen Speicher umfassen.

In einer Ausführungsform ist vorgesehen, dass das Maschinenlernmodell fahrzeuggruppenindividuell trainiert und angewendet wird. Hierdurch kann eine Güte beim Schätzen des Verbrauchs verbessert werden, weil das trainierte Maschinenlernmodell spezifisch auf einen Fahrzeugtyp und/oder eine Fahrzeugklasse trainiert ist. Insbesondere kann der Fahrzeugtyp auch eine Information zu einem Fahrzeugmodell umfassen (z.B. definiert über eine Fahrzeugmodellnummer und/oder eine Fahrzeug-ID). Ferner können weitere Informationen berücksichtigt werden, die eine Fahrzeuggruppe definieren, wie beispielsweise eine vorhandene Motorisierung und/oder eine Belegung mit Insassen (Anzahl der Insassen) und/oder eine vorhandene Sonderausstattung usw. Für jede Fahrzeuggruppe, die sich beispielsweise über gemeinsame Eigenschaften der Fahrzeuge, wie dem Fahrzeugtyp und/oder der Fahrzeugklasse, definieren lässt, wird für das Maschinenlernmodell im Rahmen der Trainingsphase ein Satz an Parametern (insbesondere Gewichte) erzeugt. Für jede Fahrzeuggruppe wird während der Anwendungsphase der jeweils zugehörige Satz an Parametern verwendet. Eine struktureller Aufbau des Maschinenlernmodells kann hierbei für alle Fahrzeuggruppen gleich sein.

In einer Ausführungsform ist vorgesehen, dass zusätzlich weitere Zustandsinformationen und/oder Kontextinformationen von den Fahrzeugen erfasst und/oder abgefragt werden und beim Trainieren und beim Schätzen als Eingangsdaten berücksichtigt werden. Hierdurch kann eine Güte beim Schätzen des Verbrauchs weiter verbessert werden.

Die weiteren Zustandsinformationen und/oder Kontextinformation können beispielsweise mindestens eine der folgenden Größen und/oder Informationen, welche auch als Deskriptoren bezeichnet werden können, umfassen:
- ein Rohbild einer Innenraumkamera,
- eine Positionsinformation eines Navigationssystems des Fahrzeugs (z.B. eine GPS-Position),
- eine Fahrzeugausrichtung, eine Fahrtrichtung, eine Information zu einem Gegen- oder Rückenwind, insbesondere in Kombination mit einer von einem Wetterdienst abgerufenen Windinformation von Wetterdiensten,
- eine Fahrspurinformation (z.B. Überholspur, mittlere Fahrspur, rechte Fahrspur)
- eine Sensorinformation, z.B. einer Umfeldkamera und/oder eines Umfeldradars:
   ∘ detailliertere Informationen (z.B. eine Form) zu Fahrzeugen im Umfeld,
   o ein Rohbild einer Umfeldkamera,
- Umfeldeinflüsse:
   o Wetterdienstinformationen (abhängig von einer geographischen Position: z.B. eine Windgeschwindigkeit und eine Windrichtung),
- Karteninformationen:
   o eine von dem jeweiligen Fahrzeug geplante Fahrtroute.

Die weiteren Zustandsinformationen werden insbesondere berücksichtigt, wenn ausreichende Rechen- und Speicherressourcen zur Verfügung stehen. Insbesondere das Verarbeiten von Kamerarohbildern erfordert mehr Eingänge beim Maschinenlernmodell, sodass sich auch eine Komplexität einer Struktur des Maschinenlernmodells erhöht. Entsprechend kann bei dieser Ausführungsform ein komplexeres Maschinenlernmodell vorgesehen sein.

In einer Ausführungsform ist vorgesehen, dass zumindest ein Teil der weiteren Zustandsinformationen und/oder Kontextinformationen dem Maschinenlernmodell als Hilfseingänge (engl. auxiliary inputs) in einem strukturell nachgelagerten Teil zugeführt wird. Hierdurch können insbesondere höherwertige Informationen, das heißt, Informationen, die bereits einen großen Informationsgehalt aufweisen, besser berücksichtigt werden, wodurch sich eine Güte beim Schätzen des Verbrauchs erhöhen lässt. Der zumindest eine Teil der weiteren Zustandsinformationen und/oder Kontextinformationen wird hierzu insbesondere an den vorderen Schichten des Maschinenlernmodells vorbei direkt einer späteren Schicht des Maschinenlernmodells als Eingangsdaten zugeführt. Der zumindest eine Teil kann insbesondere Informationen betreffen, welche sich im Vergleich zu den anderen Informationen weniger schnell mit der Zeit ändern und daher statisch oder quasi-statisch verhalten, beispielsweise eine Wetterinformation, eine Fahrspur und/oder eine geplante Route. Beispielsweise können positionsaufgelöst Ausnahmefälle (engl. Corner Cases), wie z.B. ein schlechter Asphalt oder Spurrinnen, auf diese Weise besser berücksichtigt werden.

In einer Ausführungsform ist vorgesehen, dass das trainierte Maschinenlernverfahren bei bestehender Anbindung des Fahrzeugs an einen Cloudserver für dieses Fahrzeug auf dem Cloudserver ausgeführt wird, wobei das Fahrzeug hierzu aktuelle Zustandsinformationen und/oder weitere Zustandsinformationen und/oder Kontextinformationen an den Cloudserver übermittelt und wobei der Cloudserver den geschätzten Verbrauch an das Fahrzeug übermittelt. Hierdurch können insbesondere Rechen- und Speicherressourcen des Cloudservers, die die Rechen- und Speicherressourcen des Fahrzeugs in der Regel übersteigen, genutzt werden, um den Verbrauch zu schätzen. Insbesondere kann vorgesehen sein, hierzu mehr Zustandsinformationen und/oder weitere Kontextinformationen und/oder Kontextinformationen als Eingangsdaten beim Trainieren und/oder Anwenden des Maschinenlernmodells zu berücksichtigen. Hierdurch kann eine Güte des geschätzten Verbrauchs weiter verbessert werden.

In einer Ausführungsform ist vorgesehen, dass bei mangelnder Anbindung eines Fahrzeugs an den Cloudserver, das Schätzen des Verbrauchs mittels des trainierten Maschinenlernmodells in dem Fahrzeug ausgeführt wird. Hierdurch kann zu jeder Zeit ein geschätzter Verbrauch mittels des Maschinenlernmodells bereitgestellt werden.

In einer Ausführungsform ist vorgesehen, dass beim Schätzen des Verbrauchs mittels des trainierten Maschinenlernmodells im Fahrzeug nur eine Teilmenge der Zustandsinformationen und/oder der weiteren Zustandsinformationen und/oder der Kontextinformationen berücksichtigt wird. Hierdurch kann das trainierte Maschinenlernmodell im Fahrzeug weniger komplex ausgebildet sein als das trainierte Maschinenlernmodell auf dem Cloudserver, da nur eine Teilmenge der Informationen verarbeitet werden muss.

Insbesondere kann vorgesehen sein, dass bei bestehender Anbindung an den Cloudserver, das heißt, wenn das trainierte Maschinenlernmodell auf dem Cloudserver ausgeführt wird, eine größere Menge der Informationen als Eingangsdaten berücksichtigt werden, bei mangelnder Anbindung an den Cloudserver, das heißt, wenn das trainierte Maschinenlernmodell im Fahrzeug ausgeführt wird, nur die Teilmenge der Informationen. Insbesondere kann hierzu vorgesehen sein, dass hierzu im Fahrzeug ein weniger komplex ausgebildetes trainiertes Maschinenlernmodell, also insbesondere ein trainiertes Maschinenlernmodell, das nur die Teilmenge der Informationen als Eingänge bzw. Eingangsdaten berücksichtigt, hinterlegt und angewendet wird. Auf dem Cloudserver ist hingegen ein komplexeres trainiertes Maschinenlernmodell hinterlegt und wird dort, bei bestehender Anbindung zu einem Fahrzeug, zum Schätzen des aktuellen Verbrauchs dieses Fahrzeugs dort ausgeführt, wobei mehr Informationen als in der Teilmenge beim Schätzen berücksichtigt werden, wodurch eine Struktur des Maschinenlernmodells komplexer ist, aber eine Güte beim Schätzen erhöht werden kann. Für die Ausführung des weniger komplex ausgebildeten trainierten Maschinenlernmodells im Fahrzeug wird entsprechend ein kleinerer Satz an Parametern (insbesondere Gewichtungen) benötigt im Vergleich zu der Ausführung des komplexeren trainierten Maschinenlernmodells auf dem Cloudserver.

In einer Ausführungsform ist vorgesehen, dass mittels des trainierten Maschinenlernmodells ausgehend von erwarteten oder erzeugten Zustandsinformationen und/oder erwarteten oder erzeugten weiteren Zustandsinformationen und/oder erwarteten oder erzeugten Kontextinformationen ein zukünftiger und/oder hypothetischer Verbrauch geschätzt und bereitgestellt wird. Hierdurch kann ein Verbrauch für zukünftige und/oder hypothetische Streckenabschnitte und/oder Szenarien geschätzt werden. Dies kann beispielsweise dazu verwendet werden, einen Gesamtverbrauch für eine vorgegebene Fahrtroute zu schätzen. Die Zustandsinformationen und/oder weiteren Zustandsinformationen und/oder Kontextinformationen können beispielsweise für eine zukünftig und/oder hypothetisch geplante Fahrtstrecke extrapoliert und/oder geschätzt werden. Dies kann beispielsweise mittels der Datenverarbeitungseinrichtung ausgehend von einer geplanten Fahrtroute erfolgen. Hierzu können beispielsweise Größen der Navigation verwendet werden, wie beispielsweise eine Fahrtstrecke, Fahrbahntypen, eine Topologie und/oder eine Geschwindigkeitsschätzung. Es können grundsätzlich auch historische Daten berücksichtigt werden, beispielsweise von bereits gefahrenen Strecken, auf denen ein Verbrauch erfasst wurde.

In einer weiterbildenden Ausführungsform ist vorgesehen, dass zumindest ein Teil der Zustandsinformationen und/oder der weiteren Zustandsinformationen und/oder der Kontextinformationen durch Variation erzeugt werden, wobei für die variierten Informationen jeweils ein hiermit einhergehender Verbrauch mittels des trainierten Maschinenlernmodells geschätzt wird, und wobei ausgehend hiervon diejenigen Informationen ermittelt werden, die mit einem optimierten Verbrauch einhergehen. Hierdurch kann ein Verbrauch hinsichtlich mindestens eines Optimierungskriteriums optimiert werden. Insbesondere kann vorgesehen sein, dass der zukünftige Verbrauch minimiert wird. Hierzu wird zumindest ein Teil der Zustandsinformationen und/oder der weiteren Zustandsinformationen und/oder der Kontextinformationen variiert. Das Variieren kann insbesondere auch als Pertubation bezeichnet werden, bei der die in den vorgenannten Informationen enthaltenen Eigenschaften und/oder Parameter gezielt gestört (perturbiert) werden, um variierte Eigenschaften und/oder Parameter zu erhalten. In einem einfachen Beispiel, bei dem das Fahrzeug auf einer Autobahn ohne Geschwindigkeitsbegrenzung fährt, kann vorgesehen sein, dass beispielsweise eine Geschwindigkeit variiert wird, insbesondere verringert wird. In der Regel geht eine geringere Geschwindigkeit mit einem verringerten Verbrauch einher. Es kann vorgesehen sein, dass beim Optimieren mindestens eine Randbedingung berücksichtigt wird, beispielsweise eine Vorgabe für eine gewünschte Ankunftszeit, die nicht überschritten werden soll. Entsprechend wird im genannten Beispiel beim Variieren bzw. Optimieren dann eine Geschwindigkeit gewählt, die das Einhalten der gewünschten Ankunftszeit ermöglicht, den Verbrauch der Fahrt zum Zielort im Rahmen dieser Randbedingung jedoch minimiert. Weiter können insbesondere auch eine Beschleunigung und/oder Verzögerung variiert werden sowie im Fahrzeug aktivierte Verbraucher. Darüber hinaus können beispielsweise auch Umfeldbedingungen variiert werden, um herauszufinden, ob sich hierdurch ein Verbrauch verringern, insbesondere minimieren lässt. So kann beispielsweise eine hypothetische Annahme eines Vorhandenseins eines vorausfahrenden Vorderfahrzeugs mit einem günstigen Windschatten als Variation erfolgen.

In einer Ausführungsform ist vorgesehen, dass ausgehend von den ermittelten Informationen mindestens eine Empfehlung an einen Fahrer und/oder ein Assistenzsystem des Fahrzeugs gegeben wird. Hierdurch kann der geschätzte und minimierte zukünftige Verbrauch umgesetzt werden. Es kann auch vorgesehen sein, dass mehr als eine Handlungsempfehlung gegeben wird, welche dann beispielsweise von dem Fahrer und/oder dem Assistenzsystem ausgewählt werden können. Hierbei können beispielsweise auch die jeweiligen Informationen, die variiert wurden, zusammen mit der Handlungsempfehlung ausgegeben werden, sodass der Fahrer und/oder das Assistenzsystem unter Berücksichtigung dieser variierten Informationen eine Auswahl treffen können. Führt gemäß dem vorgenannten Beispiel eine Geschwindigkeitsreduzierung zu einem verringerten zukünftigen Verbrauch, so kann dem Fahrer oder dem Assistenzsystem des Fahrzeugs beispielsweise eine entsprechende Handlungsempfehlung gegeben werden, beispielsweise indem dem Fahrer eine Information angezeigt wird und/oder diese Information dem Assistenzsystem zugeführt wird, dass eine Geschwindigkeitsreduzierung auf eine Sollgeschwindigkeit zu einem minimierten Verbrauch führen würde. Lässt sich ferner bei der vorgennannten hypothetischen Annahme eines windschattenspendenden Vorderfahrzeugs beispielsweise ein zukünftiger und/oder hypothetischer Verbrauch minimieren, so kann dem Fahrer oder dem Assistenzsystem des Fahrzeugs eine entsprechende Handlungsempfehlung gegeben werden, z.B. dass der Fahrer oder das Assistenzsystem sich ein geeignetes Vorderfahrzeug mit günstigem Windschatten, beispielsweise einen Kleinbus, suchen soll und diesem mit einem vorgegebenen Abstand folgen soll. Es kann vorgesehen sein, dass der Fahrer eine maximal akzeptable Zeitdifferenz vorgeben kann, die er bereit ist in Kauf zu nehmen für den optimierten Verbrauch. Es werden dann nur diejenigen Empfehlungen gegeben, bei deren Umsetzung diese vorgegebene maximale Zeitdifferenz unterschritten oder eingehalten wird. Zusammen mit der jeweiligen Handlungsempfehlung kann auch eine Ersparnis beim Verbrauch gegenüber dem aktuellen Verbrauch bereitgestellt werden, der sich aus einer Differenz der Verbräuche ergibt.

In einer Ausführungsform ist vorgesehen, dass der geschätzte Verbrauch mit einem realen (während des Anwendens des trainierten Maschinenlernmodells erfassten) Verbrauch verglichen wird, wobei bei einer (insbesondere aggregierten oder individuellen) Abweichung der Verbräuche oberhalb eines vorgegebenen Schwellwertes und/oder bei Vorliegen einer vorgegebenen Anzahl von Fahrzeugen mit einer (solchen) Abweichung ein Fehler erkannt wird und/oder eine Korrektur des geschätzten Verbrauchs durchgeführt wird. Hierdurch kann das trainierte Maschinenlernmodell insbesondere auf das Vorliegen eines systematischen Fehlers hin überprüft werden. Hierbei können zwei Fälle unterschieden werden: ein systematischer Fehler, der bei einer Gruppe von Fahrzeugen auftritt, beispielsweise bei allen Fahrzeugen, die eine bestimmte Wegstrecke einer Region fahren, und ein systematischer Fehler, der zu jeder Zeit bei einem Fahrzeug auftritt. Eine Abweichung bzw. ein Fehler kann im ersten Fall insbesondere auch als aggregierte Abweichung bzw. aggregierter Fehler bezeichnet werden. Eine Abweichung bzw. ein Fehler kann im zweiten Fall insbesondere auch als individuelle Abweichung bzw. individueller Fehler bezeichnet werden. Beide Arten von systematischem Fehler können mittels dieser Ausführungsform erkannt werden. Das Unterscheiden von Gruppen kann hierbei beispielsweise basierend auf gemeinsamen Eigenschaften der vorgenannten Größen und/oder Informationen erfolgen.

Im erstgenannten Fall können einerseits über die Gruppe von Fahrzeugen beispielsweise kurzzeitige lokale Effekte aufgedeckt werden, die einen systematischen Fehler des trainierten Maschinenlernmodells beschreiben. Beispielsweise gibt es bei starkem Wind auf einem Streckenabschnitt eine Abweichung zwischen dem geschätzten Verbrauch und dem realen (erfassten) Verbrauch, diese Abweichung betrifft hierbei alle Fahrzeuge, die diesen Streckenabschnitt fahren. Andere Fahrzeuge sind hingegen nicht hiervon betroffen. Hierzu wird beispielsweise über Positionsinformationen überprüft, ob auf bestimmten Streckenabschnitten der vom trainierten Maschinenlernmodell geschätzte Verbrauch vom realen erfassten Verbrauch abweicht. Hierbei kann insbesondere überprüft werden, ob eine Abweichung einen vorgegebenen Schwellwert überschreitet. Sollte dies nicht nur für eine bestimmte Fahrzeugkonfiguration (z.B. definiert über eine Fahrzeug-ID), sondern über alle Fahrzeuge der Fall sein, so ist von einem lokalen systematischen Fehler auf diesem Streckenabschnitt auszugehen. Es kann vorgesehen sein, den von dem trainierten Maschinenlernmodell geschätzten Verbrauch um den bestimmten systematischen Fehler (Abweichung) zu korrigieren. Dies erfolgt insbesondere für alle Fahrzeuge, die den betroffenen Streckenabschnitt befahren. Es kann vorgesehen sein, ausgehend von einem Vergleichs- bzw. Überprüfungsergebnis ein Nachtrainieren des Maschinenlernmodells mit auf diesem Streckenabschnitt erfassten Verbrauchsinformationen durchzuführen.

Im zweitgenannten Fall können fahrzeugspezifische, systematische Fehler bei der Verbrauchsschätzung auftreten. Beispielsweise wurde eine Dachbox auf das Fahrzeugdach montiert und/oder im Kofferraum befindet sich eine ungewöhnlich schwere Zuladung. Hierbei werden für das jeweilige Fahrzeug der geschätzte Verbrauch und der reale erfasste Verbrauch miteinander verglichen. Sollten diese bei einer Fahrt unabhängig vom Szenario, das heißt, von den Zustandsinformationen und/oder weiteren Zustandsinformationen und/oder Kontextinformationen, abweichen, kann ebenfalls über eine bestimmte Abweichung zwischen dem geschätztem Verbrauch und dem realen erfassten Verbrauch ein Fehler erkannt und eine Anpassung des geschätzten Verbrauchs erfolgen. Es kann vorgesehen sein, beim betroffenen Fahrzeug den vom trainierten Maschinenlernmodell geschätzten Verbrauch hierzu um den bestimmten systematischen Fehler (Abweichung) zu korrigieren. Die Abweichung kann insbesondere basierend auf jeweiligen Erwartungswerten von Verteilungen des geschätzten Verbrauchs und des realen erfassten Verbrauchs und/oder der bestimmten Abweichung bestimmt und korrigiert werden, beispielsweise indem eine gemittelte Abweichung zum Korrigieren verwendet wird.

Weitere Merkmale zur Ausgestaltung des Systems ergeben sich aus der Beschreibung von Ausgestaltungen des Verfahrens. Die Vorteile des Systems sind hierbei jeweils die gleichen wie bei den Ausgestaltungen des Verfahrens.

Nachfolgend wird die Erfindung anhand bevorzugter Ausführungsbeispiele unter Bezugnahme auf die Figuren näher erläutert. Hierbei zeigen:
- Fig. 1: eine schematische Darstellung von Ausführungsformen des Systems und des Verfahrens zum Schätzen eines Verbrauchs eines Fahrzeugs;
- Fig. 2: eine schematische Darstellung zur Verdeutlichung einer Ausführungsform;
- Fig. 3: eine schematische Darstellung zur Verdeutlichung einer Ausführungsform;
- Fig. 4: eine schematische Darstellung zur Verdeutlichung einer Ausführungsform.

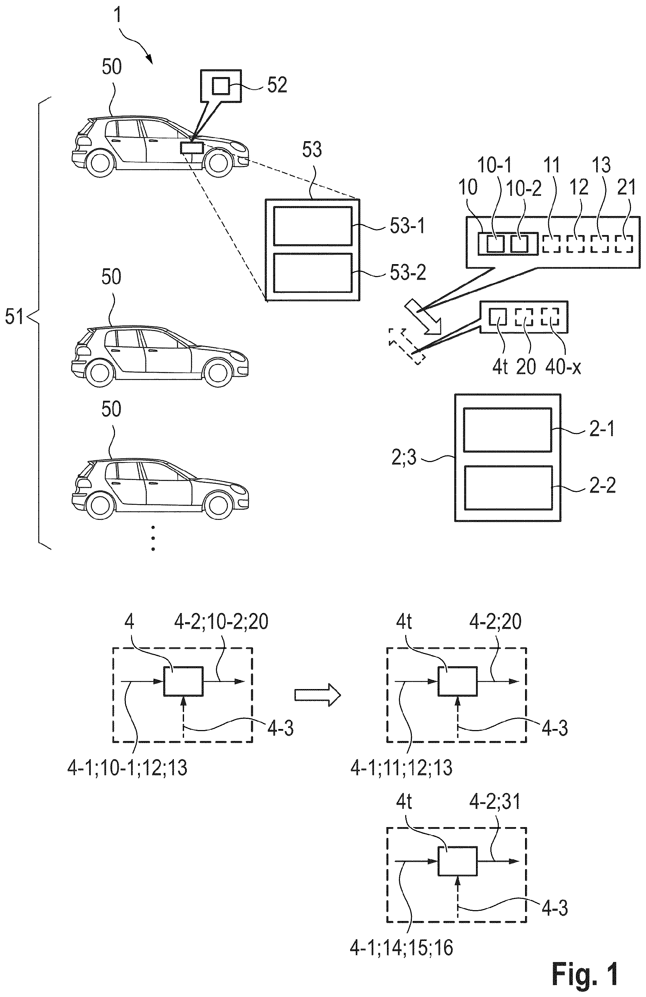

Die Fig. 1 zeigt eine schematische Darstellung einer Ausführungsform des Systems 1 und des Verfahrens zum Schätzen eines Verbrauchs 20 eines Fahrzeugs 50. Das in dieser Offenbarung beschriebene Verfahren wird nachfolgend anhand des Systems 1 näher beschrieben.

Das System 1 umfasst Fahrzeuge 50 einer Fahrzeugflotte 51. Ferner umfasst das System 1 eine Datenverarbeitungseinrichtung 2.

Die Fahrzeuge 50 sind dazu eingerichtet, jeweils Verbrauchsinformationen 10 zu sammeln, wobei die Verbrauchsinformationen 10 jeweils mindestens eine einen Fahrzeugzugstand 52 des Fahrzeugs 50 beschreibende Zustandsinformation 10-1 verknüpft mit einem erfassten Verbrauch 10-2 des Fahrzeugs 50 umfasst. Die Fahrzeuge 50 können hierzu Datenverarbeitungseinrichtungen 53 umfassen, die jeweils mindestens eine Recheneinrichtung 53-1 und mindestens einen Speicher 53-2 aufweisen.

Die Datenverarbeitungseinrichtung 2 umfasst mindestens eine Recheneinrichtung 2-1 und mindestens einen Speicher 2-2. Die Datenverarbeitungseinrichtung 2 kann beispielsweise als Cloudserver 3 ausgestaltet sein. Die Datenverarbeitungseinrichtung 2 ist dazu eingerichtet, ausgehend von den gesammelten Verbrauchsinformationen 10 ein Maschinenlernmodell 4 zu trainieren, wobei das Maschinenlernmodell 4 als Eingangsdaten 4-1 die Zustandsinformation 10-1 erhält und als Ausgangsdaten 4-2 einen Verbrauch 20 schätzt. Der erfasste Verbrauch 10-2 wird hierbei mit dem geschätzten Verbrauch 20 verglichen, wobei durch Trainieren des Maschinenlernmodells 4, das heißt, einem sukzessiven Anpassen von Parametern (insbesondere Gewichtungen), eine Abweichung in an sich bekannter Weise minimiert wird. Die gesammelten Verbrauchsinformationen 10 werden hierzu insbesondere von den Fahrzeugen 50 an die Datenverarbeitungseinrichtung 2 übermittelt, beispielsweise über hierzu eingerichtete Kommunikationsschnittstellen (nicht gezeigt).

Die Fahrzeuge 50 sind ferner dazu eingerichtet, jeweils ausgehend von aktuellen Zustandsinformationen 11 einen Verbrauch 20 des Fahrzeugs 50 mittels des trainierten Maschinenlernverfahrens 4t zu schätzen und bereitzustellen. Hierzu werden dem trainierten Maschinenlernmodell 4t die aktuellen Zustandsinformationen 11 als Eingangsdaten 4-1 zugeführt und der Verbrauch 20 wird von dem trainierten Maschinenlernmodell 4t erzeugt und als Ausgangsdaten 4-2 bereitgestellt.

Es kann vorgesehen sein, dass das trainierte Maschinenlernmodell 4t hierzu jeweils in den Fahrzeugen 50 ausgeführt wird, beispielsweise auf der Datenverarbeitungseinrichtung 53, wobei das trainierte Maschinenlernmodell 4t bzw. eine Strukturbeschreibung und ein Satz von Parametern (insbesondere Gewichten) hierzu an das jeweilige Fahrzeug 50 übermittelt wird (nicht gezeigt).

Alternativ kann das trainierte Maschinenlernmodell 4t auch auf der Datenverarbeitungseinrichtung 2 und/oder dem Cloudserver 3 ausgeführt werden. In diesem Fall übermittelt das jeweilige Fahrzeug 50 die aktuellen Zustandsinformationen 11 an die Datenverarbeitungseinrichtung 2 und/oder den Cloudserver 3 und erhält den geschätzten Verbrauch 20 zurückübermittelt.

Es kann vorgesehen sein, dass das Maschinenlernmodell 4 fahrzeuggruppenindividuell trainiert und angewendet wird. Hierzu werden anhand gemeinsamer Eigenschaften, wie beispielsweise einem Fahrzeugtyp und/oder einer Fahrzeugklasse und/oder einer Fahrzeugkonfiguration, insbesondere Fahrzeuggruppen identifiziert. Für jede der Fahrzeuggruppen wird die Trainingsphase des Maschinenlernmodells 4 durchgeführt, sodass für jede der Fahrzeuggruppen ein eigenes trainiertes Maschinenlernmodell 4t erhalten wird. Ist eine Struktur des Maschinenlernmodells 4 für alle Fahrzeuggruppen gleich, so wird insbesondere für jede Fahrzeuggruppe ein eigener Satz an Parametern (insbesondere Gewichten) erhalten und bereitgestellt. Ferner kann alternativ vorgesehen sein, dass für unterschiedliche Fahrzeuggruppen bzw. Fahrzeugkonfigurationen je ein Bereich bzw. eine Partition des Maschinenlernmodells 4 bzw. des trainierten Maschinenlernmodells 4t vorgesehen ist, der auf die spezifische Fahrzeuggruppe bzw. die spezifische Fahrzeugkonfiguration optimiert wird oder optimiert ist. Anders ausgedrückt: Es unterscheiden sich die Parameter (insbesondere die Gewichte) insbesondere nur dieses Bereichs bzw. dieser Partition des Maschinenlernmodells 4, 4t für die einzelnen Fahrzeuggruppen bzw. Fahrzeugkonfigurationen voneinander, die Parameter (insbesondere die Gewichte) im restlichen Maschinenlernmodell 4, 4t sind hingegen insbesondere die gleichen.

Es kann vorgesehen sein, dass zusätzlich weitere Zustandsinformationen 12 und/oder Kontextinformationen 13 von den Fahrzeugen 50 erfasst und/oder abgefragt werden und beim Trainieren und beim Schätzen als Eingangsdaten 4-1 berücksichtigt werden.

Es kann weiterbildend vorgesehen sein, dass zumindest ein Teil der weiteren Zustandsinformationen 12 und/oder Kontextinformationen 13 dem Maschinenlernmodell 4 als Hilfseingänge 4-3 in einem strukturell nachgelagerten Teil zugeführt wird.

Es kann vorgesehen sein, dass das trainierte Maschinenlernverfahren 4t bei bestehender Anbindung des Fahrzeugs 50 an einen Cloudserver 3 für dieses Fahrzeug 50 auf dem Cloudserver 3 ausgeführt wird, wobei das Fahrzeug 50 hierzu aktuelle

Zustandsinformationen 11 und/oder weitere Zustandsinformationen 12 und/oder Kontextinformationen 13 an den Cloudserver 3 übermittelt und wobei der Cloudserver 3 den geschätzten Verbrauch 20 an das Fahrzeug 50 übermittelt.

Es kann vorgesehen sein, dass bei mangelnder Anbindung eines Fahrzeugs 50 an den Cloudserver 3, das Schätzen des Verbrauchs 20 mittels des trainierten

Maschinenlernmodells 4t in dem Fahrzeug 50 ausgeführt wird. Hierzu wird das trainierte Maschinenlernmodell 4t mittels einer geeigneten Datenverarbeitungseinrichtung 53 im Fahrzeug 50 ausgeführt.

Es kann weiterbildend vorgesehen sein, dass beim Schätzen des Verbrauchs 20 mittels des trainierten Maschinenlernmodells 4t im Fahrzeug 50 nur eine Teilmenge der Zustandsinformationen 11 und/oder der weiteren Zustandsinformationen 12 und/oder der Kontextinformationen 13 berücksichtigt wird. Beispielsweise kann vorgesehen sein, dass nur die in der allgemeinen Beschreibung aufgelisteten Größen und/oder Informationen der Zustandsinformationen 11 als solche Teilmenge berücksichtigt wird. Die Teilmenge kann auch nur einen Teil der gelisteten Größen und/oder Informationen umfassen. Das trainierte Maschinenlernmodell 4t ist in diesem Fall weniger komplex, das heißt, mit weniger Eingängen für diese Zustandsinformationen 11, ausgestaltet. Besteht hingegen eine Anbindung (Kommunikationsverbindung) zum Cloudserver 3, so können auch weitere Informationen, insbesondere die weiteren Zustandsinformationen 12 und/oder die Kontextinformationen 13 oder ein Teil hiervon berücksichtigt werden, da aufgrund der zur Verfügung stehenden Rechen- und Speicherressourcen des Cloudservers 3 ein komplexer ausgestaltetes trainiertes Maschinenlernmodell 4t verwendet werden kann.

Es kann vorgesehen sein, dass mittels des trainierten Maschinenlernmodells 4t ausgehend von erwarteten oder erzeugten Zustandsinformationen 14 und/oder erwarteten oder erzeugten weiteren Zustandsinformationen 15 und/oder erwarteten oder erzeugten Kontextinformationen 16 ein zukünftiger und/oder hypothetischer Verbrauch 31 geschätzt und bereitgestellt wird.

Es kann weiterbildend vorgesehen sein, dass zumindest ein Teil der Zustandsinformationen 14 und/oder der weiteren Zustandsinformationen 15 und/oder der Kontextinformationen 16 durch Variation erzeugt werden, wobei für die variierten Informationen 14, 15, 16 jeweils ein hiermit einhergehender Verbrauch 31 mittels des trainierten Maschinenlernmodells 4t geschätzt wird, und wobei ausgehend hiervon diejenigen Informationen 14, 15, 16 ermittelt werden, die mit einem optimierten Verbrauch einhergehen.

Es kann weiterbildend vorgesehen sein, dass ausgehend von den ermittelten Informationen 14, 15, 16 mindestens eine Empfehlung 40 an einen Fahrer und/oder ein Assistenzsystem des Fahrzeugs 50 gegeben wird. Die Empfehlung 40 umfasst insbesondere die ermittelten Informationen 14, 15, 16, welche beispielsweise auf einer Anzeigeeinrichtung (nicht gezeigt) angezeigt werden, sodass ein Fahrer diese umsetzen kann. Alternativ oder zusätzlich kann das Assistenzsystem die Empfehlung 40 umsetzen, beispielsweise indem eine Strecken- und/oder eine Trajektorienplanung entsprechend angepasst wird. Beispielsweise kann die Empfehlung 40-x beinhalten, dass eine gegenüber einer aktuellen Geschwindigkeit reduzierte Geschwindigkeit empfohlen wird, um einen Verbrauch zu reduzieren. Ferner kann beispielsweise auch eine Änderung der Fahrtroute empfohlen werden, beispielsweise um Gegenwinde und/oder das Überqueren von Hügeln oder Bergen zu vermeiden.

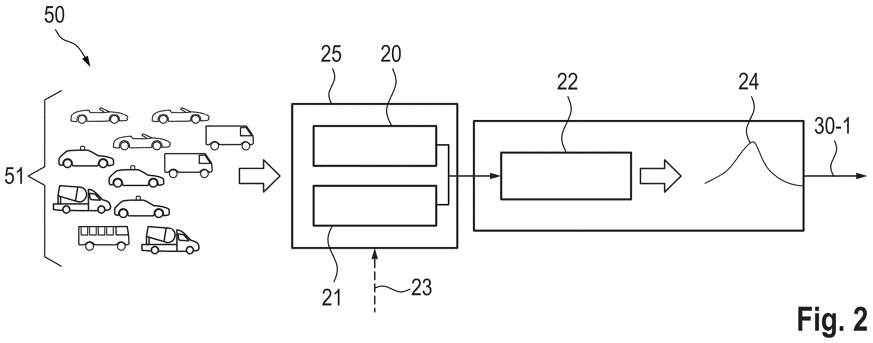

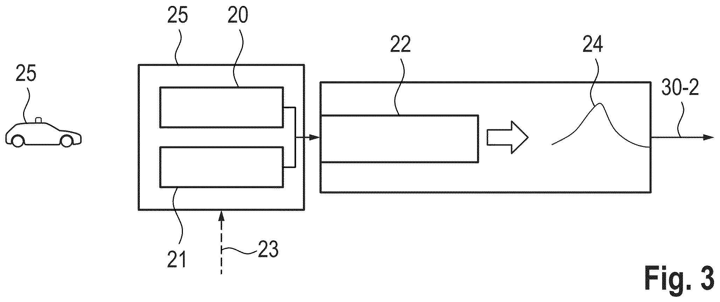

Die Figuren 2 und 3 zeigen schematische Darstellungen zur Verdeutlichung einer Ausführungsform. Die Ausführungsform ist grundsätzlich wie die in der Fig. 1 gezeigten Ausführungsformen ausgestaltet, gleiche Bezugszeichen bezeichnen gleiche Merkmale und Begriffe. Es ist bei dieser Ausführungsform vorgesehen, dass der geschätzte Verbrauch 20 mit einem realen Verbrauch 21 (der insbesondere während einer Anwendung des trainierten Maschinenlernmodells 4t erfasst wird) verglichen wird, wobei bei einer Abweichung 22 der Verbräuche 20, 21 oberhalb eines vorgegebenen Schwellwertes 23 und/oder bei Vorliegen einer vorgegebenen Anzahl von Fahrzeugen 50 mit einer (solchen) Abweichung 22 ein Fehler 30-x erkannt wird und/oder eine Korrektur des geschätzten Verbrauchs 20 durchgeführt wird.

Die Fig. 2 zeigt hierbei Fahrzeuge 50 der Fahrzeugflotte 51. Der geschätzte Verbrauch 20 jedes der Fahrzeuge 50 wird mit einem realen Verbrauch 21 des jeweiligen Fahrzeugs 50 verglichen, wobei bei einer Abweichung 22 der Verbräuche 20, 21 oberhalb eines vorgegebenen Schwellwertes 23 und/oder bei Vorliegen einer vorgegebenen Anzahl von Fahrzeugen 50 mit einer (solchen) Abweichung 22 ein Fehler 30-x erkannt wird. Der Vergleich und diese Auswertung erfolgen insbesondere im Cloudserver 3 (Fig. 1), wobei die Fahrzeuge 50 hierzu jeweils auch den realen Verbrauch 21 (Fig. 1) an den Cloudserver 3 (Fig. 1) übermitteln. Insbesondere werden die jeweiligen Werte der Verbräuche 20, 21 in einem Pufferspeicher 25 gesammelt. Aus den Verbräuchen 20, 21 kann eine jeweilige Abweichung 22 bestimmt werden. Über die Fahrzeugflotte 51 hinweg können die Abweichungen als Verteilung dargestellt werden. Ausgehend von dieser Verteilung kann eine mittlere Abweichung 24 (z.B. in Form eines Mittelwertes) bestimmt werden, welcher mit dem vorgegebenen Schwellwert 23 verglichen wird. Überschreitet die mittlere Abweichung 24 den vorgegebenen Schwellwert 23, so wird ein (systematischer) Fehler 30-x festgestellt. Dieser Fehler 30-x ist insbesondere ein über die Fahrzeuge 50 der Fahrzeugflotte 51 gemittelter bzw. aggregierter Fehler 30-1. Das Auswerten kann eine Zuordnung des festgestellten Fehlers 30-x zu hiermit einhergehenden Zustandsinformationen und/oder weiteren Zustandsinformationen und/oder Kontextinformationen umfassen. Hierdurch lässt sich der Fehler 30-x beispielsweise auf bestimmte Szenarien eingrenzen, beispielsweise eine bestimmte Region, einen bestimmten Streckenabschnitt usw. Ausgehend von dem erkannten Fehler 30-x kann eine Korrektur des geschätzten Verbrauchs 20 erfolgen, insbesondere indem dieser um die mittlere Abweichung 24 korrigiert wird.

Die Fig. 3 zeigt hierbei ein einzelnes Fahrzeug 50 der Fahrzeugflotte. Der geschätzte Verbrauch 20 wird mit einem realen Verbrauch 21 verglichen, wobei bei einer Abweichung 22 der Verbräuche 20, 21 oberhalb eines vorgegebenen Schwellwertes 23 ein Fehler 30-x erkannt wird. Dies kann in dem Fahrzeug 50 selbst und/oder auf dem Cloudserver 3 (Fig. 1) erfolgen. Der Unterschied zu der in der Fig. 2 dargestellten Variante ist, dass nur ein einzelnes Fahrzeug 50 in den Vergleich einbezogen wird. Hierdurch kann überprüft werden, ob bei einem einzelnen Fahrzeug 50 ein (systematischer) individueller Fehler 30-2 vorliegt, beispielsweise weil sich die Eigenschaften des Fahrzeugs 50 verändert haben (z.B. kann ein Windwiderstand größer sein durch eine Dachbox, eine Zuladung kann besonders groß sein usw.). Auch bei dieser Variante können über mehrere durch die Zustandsinformationen und/oder die weiteren Zustandsinformationen und/oder die Kontextinformationen definierte Szenarien hinweg jeweils Abweichungen 22 der Verbräuche 20, 21 des Fahrzeugs 50 bestimmt werden. Die Abweichungen 22 bilden eine Verteilung, aus der eine gemittelte Abweichung 24 (z.B. in Form eines Mittelwertes) für das Fahrzeug 50 bestimmt werden kann. Überschreitet die gemittelte Abweichung 24 den vorgegebenen Schwellwert 23, so wird ein (systematischer) individueller Fehler 30-2 für dieses Fahrzeug 50 festgestellt. Der (systematische) individuelle Fehler 30-2 kann anschließend korrigiert werden, beispielsweise indem der geschätzte Verbrauch 20 um die gemittelte Abweichung 24 korrigiert wird. Dies erfolgt insbesondere über alle diejenigen Szenarien hinweg, welche beim Erzeugen der Verteilungen berücksichtigt wurden. Wird zwischen Szenarien unterschieden, so kann das Korrigieren mit Hilfe eines Korrekturkennfeldes erfolgen, in dem für die einzelnen Szenarien jeweils Korrekturwerte hinterlegt sind.

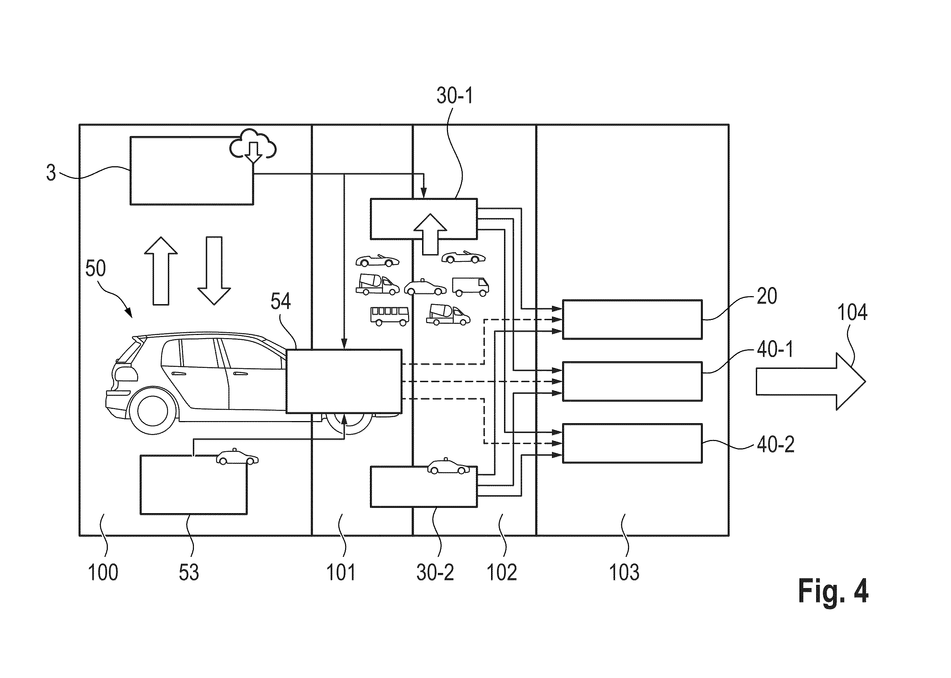

Die Fig. 4 zeigt eine schematische Darstellung zur Verdeutlichung einer Ausführungsform des Verfahrens und des Systems, bei der mehrere der voranstehend beschriebenen Ausführungsformen kombiniert realisiert sind. Betrachtet wird hierbei ein einzelnes Fahrzeug 50 der Fahrzeugflotte.

Je nachdem, ob eine Anbindung zu einem Cloudserver 3 besteht oder nicht, wird das Schätzen des Verbrauchs 20 in der voranstehend beschriebenen Art und Weise in einem Verfahrensschritt 100 mittels eines komplexeren trainierten Maschinenlernmodell auf dem Cloudserver 3 oder mittels eines weniger komplex ausgestalteten trainierten Maschinenlernmodells auf einer Datenverarbeitungseinrichtung 53 des Fahrzeugs 50 ausgeführt.

In einem Verfahrensschritt 101 wird zumindest ein Teil der Zustandsinformationen und/oder der weiteren Zustandsinformationen und/oder der Kontextinformationen variiert, wobei für die variierten Informationen jeweils ein hiermit einhergehender Verbrauch mittels des trainierten Maschinenlernmodells geschätzt wird. Ausgehend hiervon werden diejenigen Informationen ermittelt, die mit einem optimierten Verbrauch einhergehen. Basierend auf den ermittelten Informationen wird mindestens eine Empfehlung 40-x an einen Fahrer und/oder ein Assistenzsystem des Fahrzeugs 50 gegeben. Dies erfolgt beispielsweise mittels eines Analyse- und Empfehlungsmoduls 54, welches beispielsweise im Fahrzeug 50 angeordnet ist und/oder von der Datenverarbeitungseinrichtung 53 bereitgestellt wird.

In einem Verfahrensschritt 102 werden Abweichungen zwischen einem geschätzten Verbrauch und einem realen Verbrauch bestimmt. Hierbei wird insbesondere eine über mehrere Fahrzeuge 50 aggregierte Abweichung (aggregierter Fehler 30-1) bestimmt und/oder eine Abweichung (individueller Fehler 30-2), welche sich für das einzelne Fahrzeug 50 ergibt.

In einem Verfahrensschritt 104 setzt der Fahrer und/oder das Assistenzsystem des Fahrzeugs 50 eine der Empfehlungen um (oder ignoriert diese und bleibt bei einer aktuellen Fahrweise).

### Bezugszeichenliste

- 1: System
- 2: Datenverarbeitungseinrichtung
- 2-1: Recheneinrichtung
- 2-2: Speicher
- 3: Cloudserver
- 4: Maschinenlernmodell
- 4t: trainiertes Maschinenlernmodell
- 4-1: Eingangsdaten
- 4-2: Ausgangsdaten
- 4-3: Hilfseingänge
- 10: Verbrauchsinformationen
- 10-1: Zustandsinformationen (Fahrzeugzustand)
- 10-2: erfasster Verbrauch
- 11: aktuelle Zustandsinformationen
- 12: weitere Zustandsinformationen
- 13: Kontextinformationen
- 14: erwartete oder erzeugte Zustandsinformationen
- 15: erwartete oder erzeugte weitere Zustandsinformationen
- 16: erwartete oder erzeugte Kontextinformationen
- 20: geschätzter Verbrauch
- 21: erfasster Verbrauch
- 22: Abweichung
- 23: vorgegebener Schwellwert
- 24: gemittelte Abweichung
- 30-1: aggregierter Fehler
- 30-2: individueller Fehler
- 31: zukünftiger und/oder hypothetischer Verbrauch
- 40-x: Empfehlung
- 50: Fahrzeug
- 51: Fahrzeugflotte
- 52: Fahrzeugzustand
- 53: Datenverarbeitungseinrichtung (Fahrzeug)
- 53-1: Recheneinrichtung
- 53-2: Speicher
- 100-104: Verfahrensschritte

## Patentansprüche

1. Verfahren zum Schätzen eines Verbrauchs (20) eines Fahrzeugs (50),
wobei in Fahrzeugen (50) einer Fahrzeugflotte (51) jeweils Verbrauchsinformationen (10) gesammelt werden, wobei die Verbrauchsinformationen (10) jeweils mindestens eine einen Fahrzeugzugstand des Fahrzeugs (50) beschreibende Zustandsinformation (10-1) verknüpft mit einem erfassten Verbrauch (10-2) des Fahrzeugs (50) umfasst;
wobei ausgehend von den gesammelten Verbrauchsinformationen (10) ein Maschinenlernmodell (4) trainiert wird, wobei das Maschinenlernmodell (4) als Eingangsdaten (4-1) die Zustandsinformation (10-1,11) erhält und als Ausgangsdaten (4-2) einen Verbrauch (20) schätzt,
wobei ausgehend von aktuellen Zustandsinformationen (11) ein Verbrauch (20) des Fahrzeugs (50) mittels des trainierten Maschinenlernverfahrens (4t) geschätzt und bereitgestellt wird.

2. Verfahren nach Anspruch 1, **dadurch gekennzeichnet, dass** das Maschinenlernmodell (4,4t) fahrzeuggruppenindividuell trainiert und angewendet wird.

3. Verfahren nach Anspruch 1 oder 2, **dadurch gekennzeichnet, dass** zusätzlich weitere Zustandsinformationen (12) und/oder Kontextinformationen (13) von den Fahrzeugen (50) erfasst und/oder abgefragt werden und beim Trainieren und beim Schätzen als Eingangsdaten (4-1) berücksichtigt werden.

4. Verfahren nach Anspruch 3, **dadurch gekennzeichnet, dass** zumindest ein Teil der weiteren Zustandsinformationen (12) und/oder Kontextinformationen (13) dem Maschinenlernmodell (4,4t) als Hilfseingänge (4-1) in einem strukturell nachgelagerten Teil zugeführt wird.

5. Verfahren nach einem der Ansprüche 1 bis 4, **dadurch gekennzeichnet, dass** das trainierte Maschinenlernverfahren (4t) bei bestehender Anbindung des Fahrzeugs (50) an einen Cloudserver (3) für dieses Fahrzeug (50) auf dem Cloudserver (3) ausgeführt wird, wobei das Fahrzeug (50) hierzu aktuelle Zustandsinformationen (11) und/oder weitere Zustandsinformationen (12) und/oder Kontextinformationen (13) an den Cloudserver (3) übermittelt und wobei der Cloudserver (3) den geschätzten Verbrauch (20) an das Fahrzeug (50) übermittelt.

6. Verfahren nach einem der vorangegangenen Ansprüche, **dadurch gekennzeichnet, dass** bei mangelnder Anbindung eines Fahrzeugs (50) an den Cloudserver (3), das Schätzen des Verbrauchs (20) mittels des trainierten Maschinenlernmodells (4t) in dem Fahrzeug (50) ausgeführt wird.

7. Verfahren nach Anspruch 6, **dadurch gekennzeichnet, dass** beim Schätzen des Verbrauchs (20) mittels des trainierten Maschinenlernmodells (4t) im Fahrzeug (50) nur eine Teilmenge der Zustandsinformationen (11) und/oder der weiteren Zustandsinformationen (12) und/oder der Kontextinformationen (13) berücksichtigt wird.

8. Verfahren nach einem der vorangegangenen Ansprüche, **dadurch gekennzeichnet, dass** mittels des trainierten Maschinenlernmodells (4t) ausgehend von erwarteten oder erzeugten Zustandsinformationen (14) und/oder erwarteten oder erzeugten weiteren Zustandsinformationen (15) und/oder erwarteten oder erzeugten Kontextinformationen (16) ein zukünftiger und/oder hypothetischer Verbrauch (31) geschätzt und bereitgestellt wird.

9. Verfahren nach Anspruch 8, **dadurch gekennzeichnet, dass** zumindest ein Teil der Zustandsinformationen (14) und/oder der weiteren Zustandsinformationen (15) und/oder der Kontextinformationen (16) durch Variation erzeugt werden, wobei für die variierten Informationen (14,15,16) jeweils ein hiermit einhergehender Verbrauch (31) mittels des trainierten Maschinenlernmodells (4t) geschätzt wird, und wobei ausgehend hiervon diejenigen Informationen (14,15,16) ermittelt werden, die mit einem optimierten Verbrauch (31) einhergehen.

10. Verfahren nach Anspruch 9, **dadurch gekennzeichnet, dass** ausgehend von den ermittelten Informationen (14,15,16) mindestens eine Empfehlung (40-x) an einen Fahrer und/oder ein Assistenzsystem des Fahrzeugs (50) gegeben wird.

11. Verfahren nach einem der vorangegangenen Ansprüche, **dadurch gekennzeichnet, dass** der geschätzte Verbrauch (20) mit einem realen Verbrauch (21) verglichen wird, wobei bei einer Abweichung (22) der Verbräuche (20,21) oberhalb eines vorgegebenen Schwellwertes (23) und/oder bei Vorliegen einer vorgegebenen Anzahl von Fahrzeugen (50) mit einer Abweichung (22) ein Fehler (30-x) erkannt wird und/oder eine Korrektur des geschätzten Verbrauchs (20) durchgeführt wird.

12. System (1) zum Schätzen eines Verbrauchs (20) eines Fahrzeugs (50),
wobei das System (1) Fahrzeuge (50) einer Fahrzeugflotte (51) umfasst, wobei die Fahrzeuge (50) dazu eingerichtet sind, jeweils Verbrauchsinformationen (10) zu sammeln, wobei die Verbrauchsinformationen (10) jeweils mindestens eine einen Fahrzeugzugstand des Fahrzeugs (50) beschreibende Zustandsinformation (10-1) verknüpft mit einem erfassten Verbrauch (10-2) des Fahrzeugs (50) umfasst;
und eine Datenverarbeitungseinrichtung (2),
wobei die Datenverarbeitungseinrichtung (2) dazu eingerichtet ist, ausgehend von den gesammelten Verbrauchsinformationen (10) ein Maschinenlernmodell (4) zu trainieren, wobei das Maschinenlernmodell (4) als Eingangsdaten (4-1) die Zustandsinformation (10-1) erhält und als Ausgangsdaten (4-2) einen Verbrauch (20) schätzt,
wobei die Fahrzeuge (50) ferner dazu eingerichtet sind, jeweils ausgehend von aktuellen Zustandsinformationen (11) einen Verbrauch (20) des Fahrzeugs (50) mittels des trainierten Maschinenlernverfahrens (4t) zu schätzen und bereitzustellen.
